Europäisches Patentamt

European Patent Office

Office européen des brevets

(19)

(11) Veröffentlichungsnummer: **0 247 555**

**A2**

(12) ## EUROPÄISCHE PATENTANMELDUNG

(21) Anmeldenummer: **87107555.2**

(51) Int. Cl.4: **C01B 25/06**

(22) Anmeldetag: **23.05.87**

(30) Priorität: **30.05.86 DE 3618297**

(43) Veröffentlichungstag der Anmeldung:
**02.12.87 Patentblatt 87/49**

(84) Benannte Vertragsstaaten:
**CH DE ES FR GB GR LI NL**

(71) Anmelder: **DEGESCH GmbH**
**Weismüllerstrasse 28-40**
**D-6000 Frankfurt am Main(DE)**

(72) Erfinder: **Dörnemann, Manfred, Dipl.-Ing.**
**Grosser Hasenpfad 1-11**
**D-6000 Frankfurt/Main(DE)**
Erfinder: **Reif, Helmut, Dr. phil.**
**Wasenstrasse 16**
**CH-2502 Biel/Bienne(CH)**

(74) Vertreter: **Görtz, Dr. Fuchs, Dr. Luderschmidt**
**Patentanwälte**
**Sonnenberger Strasse 100 Postfach 26 26**
**D-6200 Wiesbaden(DE)**

(54) **Verfahren und Vorrichtung zur Herstellung eines Entwesungsfluids.**

(57) Die Erfindung betrifft ein Verfahren und eine Vorrichtung bzw. Anlage zur Herstellung eines Entwesungsfluids, welches ein inertes Fluid und Phosphorwasserstoff enthält, der aus der Hydrolyse eines wasserzersetzlichen Metallphosphides erhalten wird. Erfindungsgemäß wird dem inerten Fluid $H_2O$ zugesetzt, die Inertfluid/$H_2O$-Mischung mit dem Metallphosphid zur Reaktion in Berührung gebracht und das entstandene Entwesungsfluid vom festen Reaktionsrückstand abgetrennt. Die Mischung aus Inertfluid und $H_2O$ wird entweder im flüssigen oder im gasförmigen Zustand mit dem Metallphosphid zur Reaktion gebracht. Eine einfache Methode der Herstellung dem Entwesungsfluids besteht darin, daß man in einem geöffnetem Druckbehälter (1) berechnete Mengen in Metallphosphid (2), erstarrtes Inertfluid (3) und Wassereis (4) in dieser Reihenfolge übereinander schichtet, den Druckbehälter (1) verschließt und einen Temperaturausgleich mit der Umgebungstemperatur stattfinden läßt. Nach Beendigung entsprechender Reaktionen kann ein gasförmiges Gemisch aus dem Inertfluid und aus Phosphorwasserstoff über ein Entspannungsventil (7) abgezogen werden.

Fig.1

EP 0 247 555 A2

## Verfahren und Vorrichtung zur Herstellung eines Entwesungsfluids

Die Erfindung betrifft ein Verfahren und eine Vorrichtung bzw. Anlage zur Herstellung eines Entwesungsfluids, welches ein inertes Fluid und Phosphorwasserstoff enthält, der aus der Hydrolyse eines wasserzersetzlichen Metallphosphides erhalten wird.

Es ist bekannt, für die Entwesung, d.h. die Schädlingsvernichtung von bzw. in Vorräten von pflanzlichen Nahrungsmitteln, insbesondere von Getreidevorräten Phosphorwasserstoff einzusetzen. Bei den zu vernichtenden Schädlingen handelt es sich im wesentlichen um Insekten, in besonderen Fällen aber auch um Nagetiere und dergl..

Der für die Begasung von Getreidesilos, die im folgenden beispielhaft als Anwendungsfall gelten sollen, erforderliche Phosphorwasserstoff wird herkömmlicherweise durch die Hydrolyse eines wasserzersetzlichen Metallphosphides mit Wasser erzeugt. Zu diesem Zweck werden gemäß bekannten Begasungsverfahren das Metallphosphid enthaltende Präparate in dem Silo ausgelegt oder durch Bohrsonden in den Getreidevorrat eingebracht. Die Präparate reagieren dann mit der Feuchtigkeit aus dem Getreide bzw. der Umgebungsluft und setzen den erwünschten Phosphorwasserstoff frei. In verschiedenen Fällen wird zusätzlich eine Luftzwangszirkulation verwendet, um den Phosphorwasserstoff über den gesamten Siloinhalt zu verteilen. Da die Reaktion zwischen dem Metallphosphid und dem Wasser je nach Art des Metallphosphides und abhängig von anderen Einflußgrößen wie der Luftfeuchtigkeit und der Umgebungstemperatur sehr heftig verlaufen kann, verwendet man Metallphosphidpräparate, die gezielt eine verzögerte Ausgasung bewirken.

Dennoch läßt sich mit diesen Präparaten selbst bei einem gasdicht abgeschlossenen Silo kein über einen längeren Zeitraum konstante Phosphidkonzentration erreichen. Die Konzentration steigt im allgemeinen steil bis auf einen Höchstwert an und fällt dann langsam asymtotisch ab. Nun hat man aber ermittelt, daß beispielsweise bei bestimmten Insektenarten bestimmte Entwicklungsstadien, nämlich das Ei-und das Puppenstadium, zur Abtötung eine höhere Dosis - berechnet als das Produkt aus Gaskonzentration mal Zeit - benötigen als das Larvenstadium und das erwachsene Insekt. Wenn die erreichten Konzentrationen bei der Ausgasung des Metallphosphidpräparats nicht lange genug bestehen bleiben, um auch Eier und Puppen abzutöten, können diese die Begasung überstehen und sich anschließend weiterentwickeln. Es ist daher für die Begasung vorteilhafter, über einen längeren Zeitraum eine bestimmte Phosphorwasserstoffkonzentration konstant zu halten, als hohe kurzzeitige Konzentrationen zu erreichen. Nach den Ergebnissen von Versuchsreihen mit Schadinsekten ist bei den beiden Faktoren Gaskonzentration und Zeit eine Verlängerung der Zeit ungleich wirksamer als eine Erhöhung der Konzentration, vorausgesetzt, daß die Konzentration oberhalb einer gewissen Mindestschwelle liegt. Ein solcher Begasungsverlauf ist nicht nur wirkungsvoller, sondern erfordert auch insgesamt eine wesentlich geringere Einsatzmenge des giftigen Phosphorwasserstoffes. Diese Dauerkonzentration kann bei geeigneten Begasungsmethoden so niedrig gehalten werden, daß auch die Leckmengen, die das Silo verlassen, nicht mehr schädlich sind.

Für eine Begasung mit konstantem Phosphorwasserstoffgehalt über einen längeren Zeitraum ist das Auslegen von Phosphorwasserstoff entwickelnden Metallphosphiden ungeeignet. Selbst wenn man das Auslegen in kurzen Zeitabständen wiederholen würde, ließe sich keine konstante Phosphorwasserstoffkonzentration in dem Silo erzeugen, da die Ausgasungsgeschwindigkeit, wie oben erwähnt, von einer Reihe von Umweltparametern abhängig ist. Außerdem ist es wegen der gesundheitsschädigenden Giftigkeit des Phosphorwasserstoffes verboten, ein Silo zu betreten, welches sich noch im Zustand der Begasung befindet.

Es ist daher bereits vorgeschlagen worden, für eine Begasung mit zeitlich konstantem Phosphorwasserstoffgehalt eine aus Phosphorwasserstoff und Stickstoff hergestellte Gasmischung unter Druck in Vorratsflaschen zu bringen und das nach Entspannung aus diesen Flaschen enthaltene Gasgemisch geregelt in das Silo einzuleiten. Diese Art der Begasung hat den zusätzlichen Vorteil, daß im Silo keine Reaktionsrückstände bzw. Verpackungsrückstände verbleiben, wie dies beim Auslegen von Metallphosphidpräparaten der Fall ist. Die Mischung von nicht in situ erzeugtem Phosphorwasserstoffgas mit einem Inertgas ist auch allein schon deshalb erforderlich, weil Phosphorwasserstoff leicht selbstentzündlich und daher explosiv ist, und auch bereits schon in geringeren Konzentrationen in einem Trägergas bei dessen Entspannen zur Selbstentzündung neigt. Es ist daher naheliegend, Phosphorwasserstoff nicht mit einem Sauerstoff enthaltenden Gas wie Luft zu mischen, sondern mit einem Inertgas, welches zu keiner unmittelbaren Reaktion mit dem Phosphorwasserstoff führt.

Es ist auch bereits bekannt, daß Kohlendioxid im Konzentrationsbereich von einigen Volumenprozenten als Synergist von Phosphorwasserstoff wirkt und dadurch die Abtötung der Insekten zeitlich beschleunigt und somit Verminderung der Phosphorwasserstoffkonzentration erlaubt.

Die Herstellung einer Mischung aus Phosphorwasserstoff und einem Inertgas ist jedoch in sich schon nicht unproblematisch, da die Handhabung des Phosphorwasserstoffes dabei wegen seiner leichten Selbstentzündlichkeit äußerst gefährlich ist. Insbesondere ist es nur unter großen Sicherheitsmaßnahmen möglich, am Ort der Begasung Phosphorwasserstoff mit einem Inertgas zu mischen, da der Transport von Phosphorwasserstoff in reiner Form sehr gefährlich und die erforderlichen aufwendigen Aufbereitungsvorrichtungen vor Ort der Begasung nicht ohne weiteres vorhanden sind.

Der Erfindung liegt daher die Aufgabe zugrunde, ein Verfahren zum Erzeugen eines Phosphorwasserstoff und ein Inertfluid enthaltenden Entwesungsfluids bereitzustellen, mit dem es möglich ist, das Entwesungsfluid nicht nur an zentralen Orten gefahrlos herzustellen und in geeigneten Behältern an den Einsatzort zu verbringen, sondern welches ohne allzugroßen apparativen Aufwand, sei es mit Hilfe einer stationären oder auch beweglichen Anlage, am Begasungsort selbst durchgeführt werden kann, und welches darüber hinaus eine bequeme und genaue Steuerung des Phosphidgehalts im Inertfluid und somit die einfache Einhaltung optimaler Begasungsbedingungen auf ungefährliche Art und Weise gestattet.

Diese Aufgabe wird für ein Verfahren der eingangs bezeichneten Art erfindungsgemäß dadurch gelöst, daß dem inerten Fluid $H_2O$ zugesetzt, die Inertfluid/$H_2O$-Mischung mit dem Metallphosphid zur Reaktion in Berührung gebracht und das entstandene Entwesungsfluid vom festen Reaktionsrückstand abgetrennt wird.

Diese grundsätzliche Vorgehensweise, bei der bereits das Inertfluid mit der und nur der für die Phosphidhydrolyse erforderlichen geregelten $H_2O$-Menge zusammengebracht und erst diese Mischung mit dem Metallphosphid reagieren gelassen wird, läßt verschiedene Verfahrensvarianten zu, die im einzelnen besonders vorteilhaft sein können und in den Unteransprüchen beansprucht sind.

So ist es möglich, die Mischung aus Inertfluid und $H_2O$ entweder im flüssigen oder im gasförmigen Zustand mit dem Metallphosphid zur Reaktion zu bringen. Die Reaktion im flüssigen Zustand kann vorteilhaft sein, wenn das erhaltene Entwesungsfluid seinerseits wieder für den Weiterversand, beispielsweise auf Stahlflaschen, abgefüllt werden soll.

Eine sehr einfache Methode der diskontinuierlichen Herstellung des Entwesungsfluids besteht darin, daß man in einem geöffneten Druckbehälter berechnete Mengen an Metallphosphid, erstarrtes Inertfluid und Wassereis in dieser Reihenfolge übereinanderschichtet, den Druckbehälter verschließt und einen Temperaturausgleich mit der Umgebungstemperatur stattfinden läßt. Das über dem Metallphosphid befindliche zuerst in den flüssigen Zustand übergehende Inertfluid nimmt langsam Wasser aus dem geschmolzenen Wassereis auf und bringt dieses mit dem Metallphosphid in Berührung zur Reaktion. Nach Beendigung der Reaktion kann ein gasförmiges Gemisch aus dem Inertfluid und aus Phosphorwasserstoff über ein Entspannungsventil abgezogen werden.

Eine kontinuierliche Variante dieser Vorgehensweise besteht darin, daß in einen kontinuierlichen Strom des im flüssigen Zustand befindlichen Inertfluids die für die Reaktion erforderliche flüssige Wassermenge injiziert und diese Flüssigkeitsmischung in eine das Metallphosphid enthaltende Reaktions-bzw. Extraktionskolonne geleitet wird. Das entstandene, über ein Entspannungsventil gasförmig abgezogene Entwesungsfluid kann nach entsprechender Konzentrationsverminderung durch Zuführung von weiterem, gasförmigem Inertfluid über ein geeignetes Rohrverteilersystem entweder direkt zur Begasung verwendet oder aber durch indirekte Kühlung mittels eines geeigneten Kühlmittels in druckfesten Stahlflaschen niedergeschlagen werden.

Eine besonders bevorzugte Ausführungsform des erfindungsgemäßen Verfahrens besteht darin, Inertfluid im gasförmigen Zustand mit Wasserdampf zu sättigen. Dieses mit Feuchtigkeit beladene Inertgas wird dann dem das Metallphosphid enthaltenden Reaktionsbehälter zugeführt. Durch eine Temperaturregelung des Wasserbehälters ergibt sich hier eine ausgezeichnete Regelungsmöglichkeit für die dem Reaktionsraum zugeführte Wassermenge, da die Aufnahme von Wasserdampf durch das Inertgas durch die Beeinflussung der Sättigungstemperatur geregelt werden kann. Zusätzlich ist eine Temperaturregelung des Reaktionsbehälters zweckmäßig. Sollte die Reaktion im Reaktionsbehälter eine nicht gewünschte Temperatur erreichen, kann dieses leicht durch einen Temperaturfühler festgestellt und der Zustand entweder durch Unterbindung der Inertgasförderung, durch Absenken der Temperatur im Wasserbehälter oder durch unmittelbares Einleiten von entspannungsgekühltem Inertgas gegengesteuert werden. Es ergeben sich bei dieser Verfahrensvariante besonders einfache und vielfältige Möglichkeiten, den Reaktionsvorgang sicher und geregelt ablaufen zu lassen. Das entstandene Entwesungsgas aus Phosphorwasserstoff und Inertgas kann unmittelbar einer Rohrverteilanlage für die Begasung zugeführt werden.

Die Erfindung betrifft auch geeignete Anlagen zur Durchführung der beanspruchten Verfahren.

In Zusamenhang mit den Ausführungsbeispielen wird die Erfindung für die Verwendung von Kohlendioxid als Inertfluid in Verbindung mit Magnesiumphosphid näher erläutert. Neben dem eingangs erwähnten synergistischen Effekt des Kohlendioxids hat seine Verwendung auch noch den weiteren Vorteil, daß sich das Kohlendioxid an der Reaktion teilweise beteiligt und sich bei der Verwendung von Magnesiumphosphid als Reaktionsrückstand Magnesiumcarbonat ergibt, welches ein ungefährliches Salz ist, das in der Natur in Form von Dolomit vorkommt. Bei Verwendung von Kohlendioxid und Magnesiumphosphid ergibt sich folgende Umsetzungsgleichung:

$$Mg3P2 + 3\ CO2 + 3\ H2O \rightarrow 2\ PH3 + 3\ MgCO3.$$

Bei Abwesenheit von Kohlendioxid bzw. Verwendung eines anderen Inertgases wie Stickstoff ergibt sich als basischer Reaktionsrückstand Magnesiumhydroxid.

Wie bereits oben erwähnt, ist es bei Verwendung von Kohlendioxid als Inertfluid wegen des synergistischen Effektes möglich, mit niedrigsten Phosphorwasserstoffkonzentrationen im Entwesungsfluid zu arbeiten. Dies ist nich nur von Vorteil im Hinblick auf die Entzündungssicherheit des Phosphorwasserstoffes, sondern führt auch dazu, daß das Entwesungsgas wegen seines geringeren Phosphorwasserstoffgehaltes weniger korrodierend, insbesondere auf Metalloberflächen wirkt. Diese Eigenschaft des Phosphorwasserstoffes kann bei seiner Verwendung in der Nähe von elektronischen Anlagen bedenklich werden, deren Kontaktoberflächen durch den Phosphorwasserstoff korrodiert werden können.

Im folgenden wird die Erfindung anhand von Ausführungsbeispielen in Verbindung mit einer Beschreibung der beigefügten Zeichnungen im einzelnen näher erläutert, wobei anhand der dargestellten Verfahrensschemata auch noch auf weitere bedeutsame Verfahrensführungsmerkmale eingegangen werden soll. Es stellen dar:

Fig. 1 einen schematischen Schnitt durch ein Reaktionsdruckgefäß zur Erläuterung eines diskontinuierlichen, geschlossenen Reaktionsverfahrens;

Fig. 2 ein Verfahrensschema für das geschlossene Reaktionsverfahren;

Fig. 3 eine schematische Darstellung eines Extraktionsverfahrens;

Fig. 4 ein Verfahrensschema einer Anlage zur Durchführung des Extraktionsverfahrens;

Fig. 5 eine schematische Verfahrensdarstellung für ein kontinuierliches Verfahren unter Verwendung von mit Wasserdampf gesättigtem $CO_2$ und

Fig. 6 Verfahrensschema einer Anlage zur Durchführung des Verfahrens nach Fig. 5.

## Beispiel 1

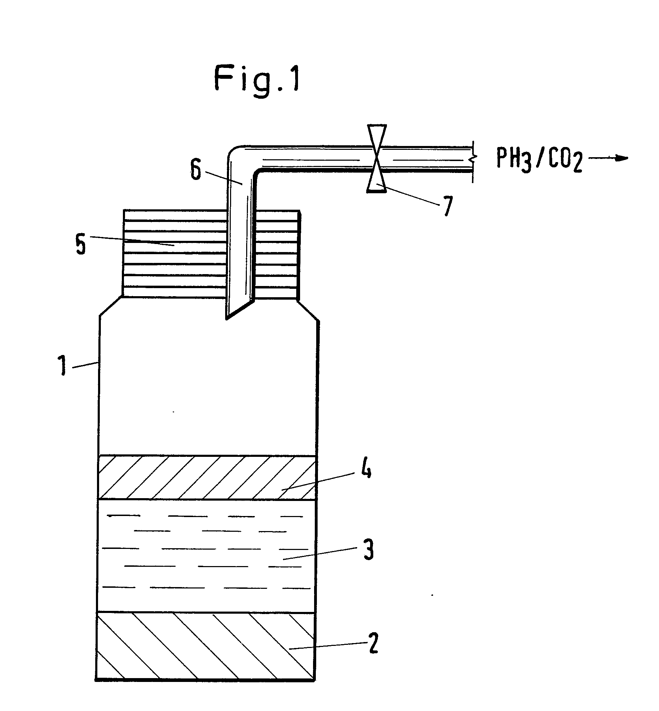

Mit der in Fig. 1 schematisch dargestellten Reaktionsanordnung wurde folgender Versuch durchgeführt: In einen geöffneten Druckbehälter 1 mit zwei Liter Fassungsvermögen wurden nacheinander 134 g Magnesiumphosphid 2, 1000 g Kohlendioxidschnee 3 und 54 g Wassereis 4 in dieser Reihenfolge eingegeben und übereinandergeschichtet. Durch die tiefe Temperatur des Kohlendioxidschnees, die bei Normaldruck etwa -78°C beträgt, sowie durch die räumliche Trennung von Metallphosphid und Wassereis findet keine unmittelbare Hydrolysereaktion statt. Der Druckbehälter 1 wurde daraufhin mit einem Deckel 5 druckfest verschlossen, der ein Abzugsrohr 6 enthielt, welches mit einem Entspannungsventil 7 versehen war. Der so verschlossene Druckbehälter wurde zum Temperaturausgleich bei Raumtemperatur stehen gelassen. Im Zuge der Temperaturerhöhung schmilzt zuerst das Kohlendioxid und geht in flüssiges Kohlendioxid unter erhöhtem Druck über. Bei entsprechender Temperatur beginnt dann auch das Wassereis zu schmelzen und flüssiges Wasser vermischt sich mit dem Kohlendioxid. Diese Mischung gelangt dann an das Magnesiumphosphid, wobei die weiter oben angegebene Hydrolysereaktion ausgelöst wird. Nach vollständiger Reaktion wurde bei diesem Versuch eine 7,8 %ige Lösung von Phosphorwasserstoff in Kohlendioxid erhalten. Dieses Gas kann über das Abzugsrohr 6 und das Entspannungsventil 7 dem Druckbehälter 1 entnommen werden. Sofern das Abzugsrohr 6 nicht als Steigrohr ausgebildet ist und bis in den unteren Teil des Druckbehälters 1 hineinragt, bleiben im Behälter das unschädliche Magnesiumcarboat als Ausgasungsrest sowie ein eventuell vorhandener Wasserüberschuß zurück. Da der Dampfdruck von flüssigem Phosphorwasserstoff mit ca. 42 bar etwas niedriger liegt als der Dampfdruck flüssigen Kohlendioxids mit ca. 56 bar, ist der Phosphidgehalt des dem Druckbehälter entnommenen, nach Entspannung erhaltenem Entwesungsgas zu Beginn der Gasentnahme niedriger als gegen Ende, wenn das Behältervolumen nahezu verbraucht ist. Dieser Änderung in der Konzentration des Entwesungsgases kann erforderlichenfalls durch Zudosierung von weiterem gasförmigen Kohlendioxid Rechnung getragen werden.

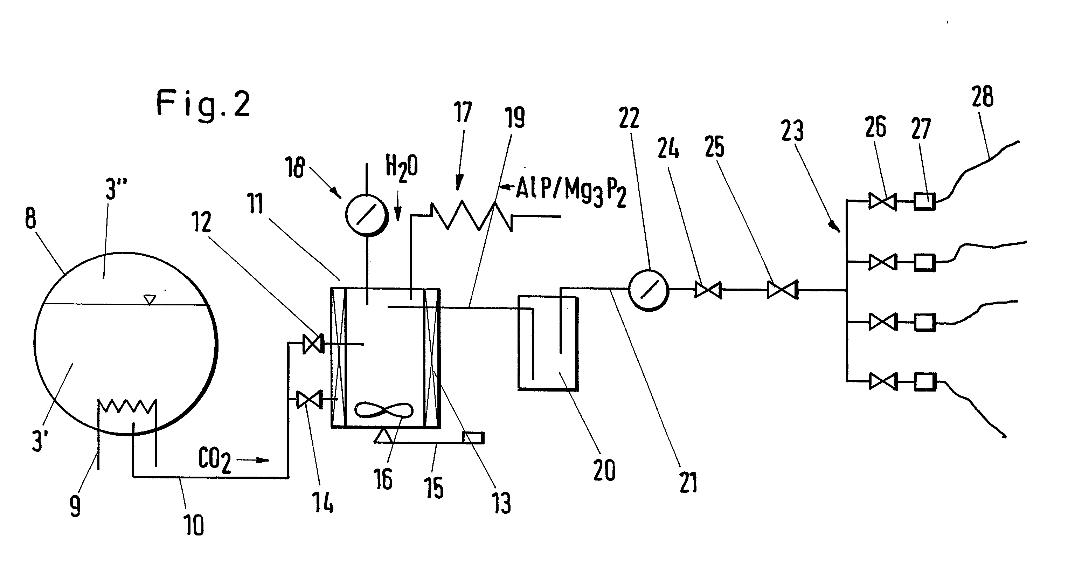

Figur 2 stellt ein Verfahrensschema einer Anlage zur Durchführung der Reaktion nach Beispiel 1 dar. In einem Vorratsbehälter 8 ist flüssiges Kohlendioxid 3' gelagert. Je nach Ausführung des Behälters findet die Lagerung bei einem Druck zwischen 15 und 70 bar statt. Über dem flüssigen Kohlendioxid 3' befindet sich ein Gasraum mit gasförmigem Kohlendioxid 3". Der Vorratsbehälter 8 ist mit einer im Bedarfsfalle verwendbaren Wärmetauscheinrichtung 9 versehen, um das flüssige Kohlendioxid für das weitere Verfahren auf eine gewünschte Temperatur einstellen zu können. Aus dem unteren Teil des Vorratsbehälters 8 führt eine Leitung 10 für flüssiges Kohlendioxid in einen Reaktor 11. Vor Eintritt in den Reaktor 11 ist die Leitung 10 mit einem Entspannungsventil 12 versehen. Der Reaktor 11 weist noch einen Kühlmantel 13 auf, der über eine von der Leitung 10 abzweigende Leitung mit einem Entspannungsventil 14 mit Kohlendioxid beaufschlagbar ist.

Der Reaktor 11 ruht auf einer Wiegeeinrichtung 15 und ist im Inneren mit einem im Bedarfsfall einsetzbaren Rührwerk 16 versehen. An der Oberseite des Reaktors 11 sind Zuführeinrichtungen 17 für das Phosphid und 18 für Wasser vorgesehen. Die Zuführeinrichtung 17 für die Phosphid ist schematisch als eine Förderschnecke dargestellt, um anzudeuten, daß hier ein Feststoff in den Reaktor eingegeben werden muß. Die Zugabeeinrichtung 18 für das Wasser ist andeutungsweise mit einem Durchflußmengenmesser versehen. Je nachdem, ob beim Befüllen des Reaktors drucklos oder unter Druck gearbeitet wird, müßten erforderlichenfalls zusätzlich noch entsprechende Einschleus-bzw. Pumpeinrichtungen für das Phosphid und das Wasser vorgesehen sein. Wird das Wasser als Eis zugeführt, könnten der Phosphideingabe 17 entsprechende Vorrichtungen angeordnet werden. Das entstandene Entwesungsgas wird dem Reaktor 11 über eine Leitung 19 entnommen, die zu einem Wasserabscheider 20 führt. Von hier aus führt eine Entnahmeleitung 21 über einen Mengenmesser 22 zu einem Leitungsverteilsystem 23. Bei 24 und 25 sind noch Entnahmestutzen für eine Feuchtemessung bzw. eine Analyseneinrichtung angedeutet. Das Leitungsverteilsystem verfügt über eine Anzahl von Entnahmeventilen 26, an die über Kupplungen 27 Begasungsschläuche 28 anschließbar sind. Diese Begasungsschläuche 28 können unmittelbar mit einem Behälter-Begasungsverteilsystem verbunden werden.

Die in Fig. 2 dargestellte Anlage ist für einen diskontinuierlichen Betrieb geeignet, wie er in Beispiel 1 beschrieben wurde, kann aber bei entsprechender Anpassung der Meß-und Dosierungseinrichtungen auch kontinuierlich betrieben werden. Die Befüllung des Reaktors 11 kann je nach Art der Beschickungseinrichtungen und des gewünschten Verfahrensablaufes drucklos oder auch unter Druck erfolgen. Bei druckloser Befüllung kann das Phosphid mit der Förderschnecke 17 problemlos in den Reaktor eingegeben werden. Mit der unter dem Reaktor 11 angeordneten Waage 15 ist eine genaue Mengenbestimmung möglich. Die Entspannung des über das Ventil 12 in den Reaktor 11 einzugebenden flüssigen Kohlendioxids kann derart erfolgen, daß sich durch die Entspannung Kohlendioxideis bildet, mit welchem, wie bei Beispiel 1 beschrieben, das Phosphid überschichtet werden kann. Schließlich kann auf das Kohlendioxideis durch eine entsprechend abgewandelte Wasserzugabeeinrichtung 18 auch Wassereis aufgeschichtet werden. Durch den Wärmetauschermantel 13 des Reaktors 11 kann durch Zuführung entsprechender Medien erforderlichenfalls auch eine Erwärmung der Füllmenge des nunmehr geschlossenen Reaktors erfolgen. Nach Verflüssigung des Kohlendioxideises und des Wassereises kann der Reaktionsablauf durch das Rührwerk 16 beschleunigt werden. Nach vollständig abgelaufener Reaktion kann das erzeugte Entwesungsfluid unter Entspannung dem Reaktor entnommen und in dem Wasserabscheider 20 von überschüssigem Reaktionswasser getrennt werden. Das Entwesungsgas wird dann über die sich anschließenden, oben beschriebenen Einrichtungen unmittelbar dem zu begasenden Behälter zugeführt.

Bei geschlossener Arbeitsweise kann der Reaktor 11 auch unter Druck mit dem Phosphid über eine entsprechende Druckschleuse beschickt werden. Kohlendioxid und Wasser werden in diesem Fall zweckmäßigerweise in flüssiger Form eindosiert. Dies kann kontinuierlich wie auch chargenweise vorgenommen werden. Die erforderlichen Zustandsbedingungen der beteiligten Stoffe sind dann entsprechend einzustellen.

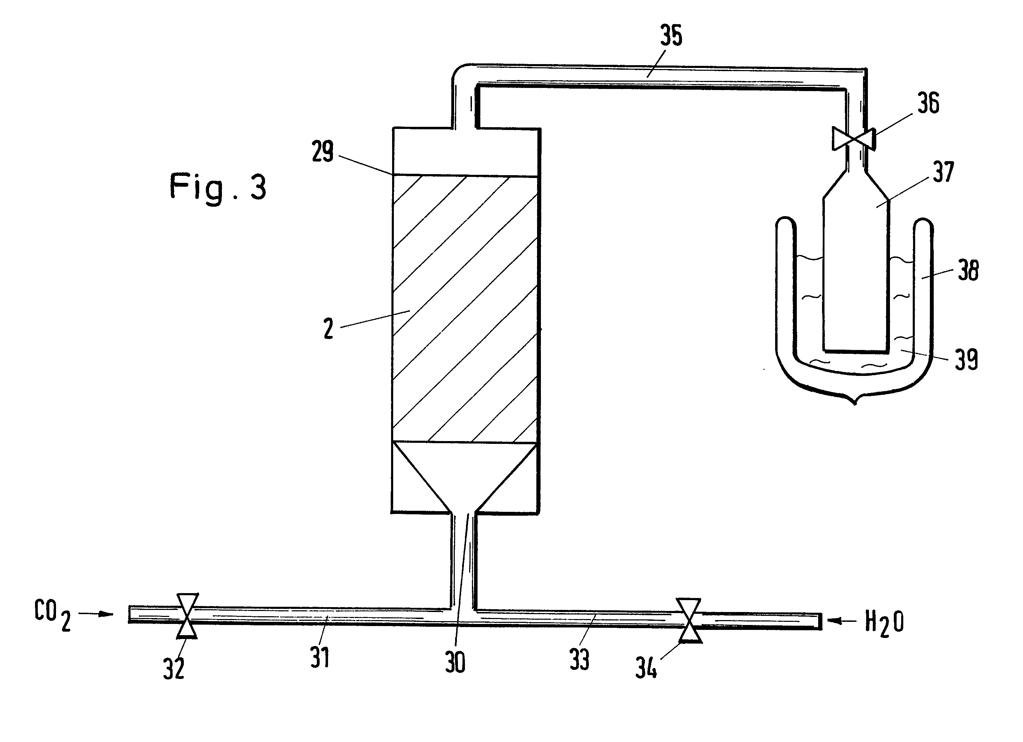

Eine kontinuierliche Verfahrensvariante zur Herstellung eines phosphidhaltigen Entwesungsfluids ist in Fig. 3 veranschaulicht. Es handelt sich dabei um die Hydrolyse von Metallphosphiden in geschlossener Anlage durch flüssiges Kohlendioxid, dem die benötigten Wassermengen durch Injektion zugefügt werden. Da an anderer Stelle der Anlage die beiden Gase durch fraktionierte Destillation getrennt und das Kohlendioxid in den Prozeß rückgeführt werden kann, kann diese kontinuierliche Hydrolyse auch als "Extraktion" von Phosphorwasserstoff aus den Metallphosphiden bezeichnet werden.

Figur 3 zeigt einen vertikalen Reaktor 29, der in seinem mittleren Bereich mit Magnesiumphosphid 2 gefüllt ist. An seinem unteren Ende weist der Reaktor 29 eine Flüssigkeitseinführung 30 auf, an die zwei Leitungen angeschlossen sind, nämlich einerseits eine Leitung 31 mit einem Ventil 32 für die Zuführung von Kohlendioxid und andererseits eine Leitung 33 mit einem Ventil 34 für die Zuführung von $H_2O$. An seinem oberen Ende ist der Reaktor 29 mit einer Abzugsleitung 35 für das Entwesungsfluid versehen, die über ein Ventil 36 mit einem Kondensationsbehälter 37 verbunden ist, welcher seinerseits in einem Kühlmantel 38 steht, der mit einem die Kondensation des Entwesungsgases bewirkenden Kühlmittel, nämlich flüssigem Stickstoff, gefüllt ist.

Im Ausführungsbeispiel ist eine Durchströmung des Magnesiumphosphids mit Kohlendioxid und Wasser von unten nach oben vorgesehen. Eine entgegengerichtete Durchströmung wäre auch möglich. In die Flüssigkeitszuführung 30 werden aus den Leitungen 31 und 33 mittels der Ventile 32 und 34 bestimmte Mengen an flüssigem Kohlendioxid und flüssigem Wasser eindosiert. Die Mischung der beiden Flüssigkeiten findet bereits vor dem Eintritt in den Reaktor statt. Als Variante ist es auch möglich, die beiden Flüssigkeiten dem unteren Reaktorende getrennt zuzuführen, um sie erst dort miteinander zu mischen. Am oberen Ende wird der Kolonne 29 das durch die Reaktion mit dem Phosphid entstandene Entwesungsfluid flüssig, bei entsprechender Entspannung aber auch gasförmig entnommen und im Ausführungsbeispiel in ein Kondensationsgefäß in Form eines Stahlzylinders eingeleitet, der als Versandbehälter für das Entwesungsfluid dient. Um das Entwesungsfluid im Stahlzylinder wieder als Flüssigkeit zu erhalten, ist eine Kondensation bei entsprechend niedrigen Temperaturen erforderlich, die durch Kühlung mittels flüssigen Stickstoffes erreicht werden kann.

Bei den hier beschriebenen sog. "Extraktionsverfahren" kann es vorteilhaft sein, im überkritischen Bereich des Kohlendioxids zu arbeiten. Der Reaktor 10 muß dabei als Druckbehälter ausgebildet sein, der für Arbeitsdrucke zwischen 80 und 100 bar ausgelegt ist. Flüssiges Kohlendioxid gewährt zwar schon einen günstigen Masse- und Wärmetransport bei dieser Verfahrensvariante, im überkritischen Zustand weist das Kohlendioxid jedoch noch eine bessere Beweglichkeit auf.

Durch Messungen der Phosphorwasserstoffkonzentration im erzeugten Entwesungsfluid und einer danach gesteuerten Wasserdosierung läßt sich der Prozeß leicht unter Kontrolle halten. Bei der Kondensation des Entwesungsgases in den Stahlzylinder 37 kann auch noch zusätzliches Kohlendioxid zur Verdünnung mit hinzugenommen werden, um im Stahlzylinder ein Entwesungsfluid gebrauchsfertiger Konzentration zu erhalten.

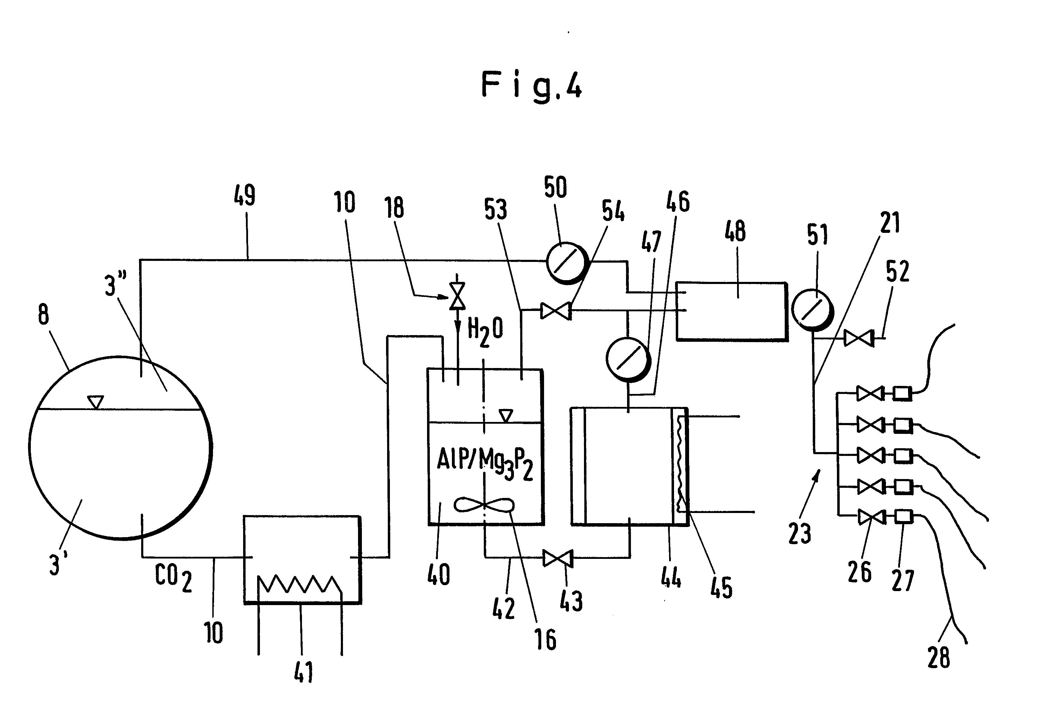

In Figur 4 ist das Schema einer Anlage dargestellt, die in Abänderung der Anlage gemäß Fig. 2 für die kontinuierliche Herstellung des Entwesungsfluids nach dem oben beschriebenen Extraktionsverfahren betrieben werden kann. Dem Schema der Fig. 2 entsprechende Aggregate sind mit gleichen Bezugsziffern bezeichnet.

Im Vorratsbehälter 8 ist flüssiges Kohlendioxid vorzugsweise bei einem Druck von 70 bar gelagert. Der $CO_2$-Vorratsbehälter ist über eine Leitung 10 für flüssiges $CO_2$ mit einem Reaktor 40 verbunden. In die Leitung 10 ist noch ein indirekter Wärmetauscher 41 eingeschaltet. Mit Hilfe dieses Wärmetauschers läßt sich die Temperatur des flüssigen Kohlendioxids vor Eintritt in den Reaktor 40 auf einen bestimmten Wert einstellen. Soll im überkritischen Bereich des Kohlendioxids gearbeitet werden, muß in dem Wärmetauscher 41 im allgemeinen eine Erwärmung des Kohlendioxids vorgenommen werden. Bei diesem Ausführungsbeispiel ist die Kohlendioxidleitung 10 in das obere Ende des Reaktors eingeführt. Eine erste Entnahmeleitung 42 für das Entwesungsfluid verläßt den Reaktor 40 am unteren Ende, so daß bei dieser Ausführungsform mit abwärts strömenden Medien gearbeitet werden kann. Eine Zuführeinrichung 18 für das Zuführen von $H_2O$ in den Reaktor 40 befindet sich ebenfalls am oberen Ende des Reaktors 40. Sie ist für die Zudosierung von flüssigem Wasser ausgelegt. Die Beschickungsmöglichkeit des Reaktors 40 mit Aluminiumphosphid oder Magnesiumphosphid ist in diesem Verfahrensschema nicht dargestellt. Es besteht die Möglichkeit, den Reaktor 40 im geöffneten Zustand einmal mit Phosphid zu füllen, um dann anschließend den Vorgang kontinuierlich ablaufen zu lassen, bis die Phosphidmenge verbraucht ist. Sodann werden die Ausgasungsrückstände aus dem Reaktor entfernt und der Reaktor wird neu befüllt. Eine kontinuierliche Zugabemöglichkeit für das Phosphid mittels einer Rotationsschleuse oder dergl. wäre natürlich auch denkbar.

Die erste Entnahmeleitung 42 ist über ein Ventil 43 mit einem Sammelbehälter 44 verbunden. Der Sammelbehälter 44 ist für den Bedarfsfall mit einem Wärmetauschmantel 45 versehen. Hier kann eine Kühlung erforderlich sein, falls das erzeugte Entwesungsfluid bei vermindertem Druck im flüssigen Zustand gehalten werden soll. Dies ist z.B. dann erforderlich wenn ein flüssiges Abfüllen des Entwesungsfluids im Behälter vorgesehen ist.

Am oberen Ende des Sammelbehälters 44 ist eine Entnahmeleitung 46 vorgesehen, die über einen Mengenmesser 47 in einen Mischdosierbehälter 48 führt. Gleichzeitig ist eine Leitung 49 für gasförmiges $CO_2$ aus dem Gasraum des Vorratsbehälters 8 vorgesehen, die über einen Mengenmesser 50 ebenfalls in den Mischdosierbehälter 48 führt. Über diese Leitung 49 kann das aus dem Sammelbehälter 44 kommende Entwesungsfluid mit gasförmigem $CO_2$ im Mischdosierbehälter 48 auf eine erforderliche Gebrauchskonzentration verdünnt werden. Über eine Leitung 21, die wiederum einen Mengenmesser 51 enthält, wird das Entwesungsgas einem Leitungsverteilsystem 23 zugeführt, welches demjenigen nach Fig. 2 entspricht. Die Leitung 21 enthält nach einen Entnahmestutzen 52, der zur Probenentnahme für Analysenzwecke des fertigen Entwesungsgases dienen kann.

Vom oberen Teil des Reaktors 40 führt noch eine Leitung 53 über ein Ventil 54 ebenfalls in den Mischdosierbehälter 6.

Die beschriebene Anlage läßt für den Bereich hinter dem Reaktor 40 unterschiedliche Betriebsweisen zu. Soll Entwesungsgas ohne Zwischenspeicherung unmittelbar dem Leitungsverteilsystem 23 zum direkten Einsatz zugeführt werden, kann das im Reaktor 40 erzeugte Entwesungsgas über die Kopfleitung 53 und das Entspannungsventil 54 abgezogen und dem Mischdosierbehälter 48 zugeführt werden. Das Ventil 43 am unteren Ende des Reaktors bleibt dabei geschlossen. Verdünnung des erzeugten Entwesungsgases kann mit gasförmigen $CO_2$ erfolgen, welches über die Leitung 49 dem Mischdosierbehälter 48 zugeführt wird. Soll das Entwesungsfluid flüssig abgezogen werden, wird die Leitung 42 am unteren Ende des Reaktors benutzt. Bei entsprechender Kühlung kann das Entwesungsfluid im Sammelbehälter 44 zwischengelagert werden. Von dort kann es nach gewisser Bevorratung über ein (nicht dargestelltes) Entspannungsventil und die Leitung 46 entnommen und ebenfalls dem Mischdosierbehälter 48 zugeführt werden. Die Leitung 53 kann auch dazu benutzt werden, Entwesungsgas aus der Leitung 46 zum Reaktor 40 zurückzuführen, falls noch eine weitere Aufkonzentrierung mit Phosphid erwünscht ist.

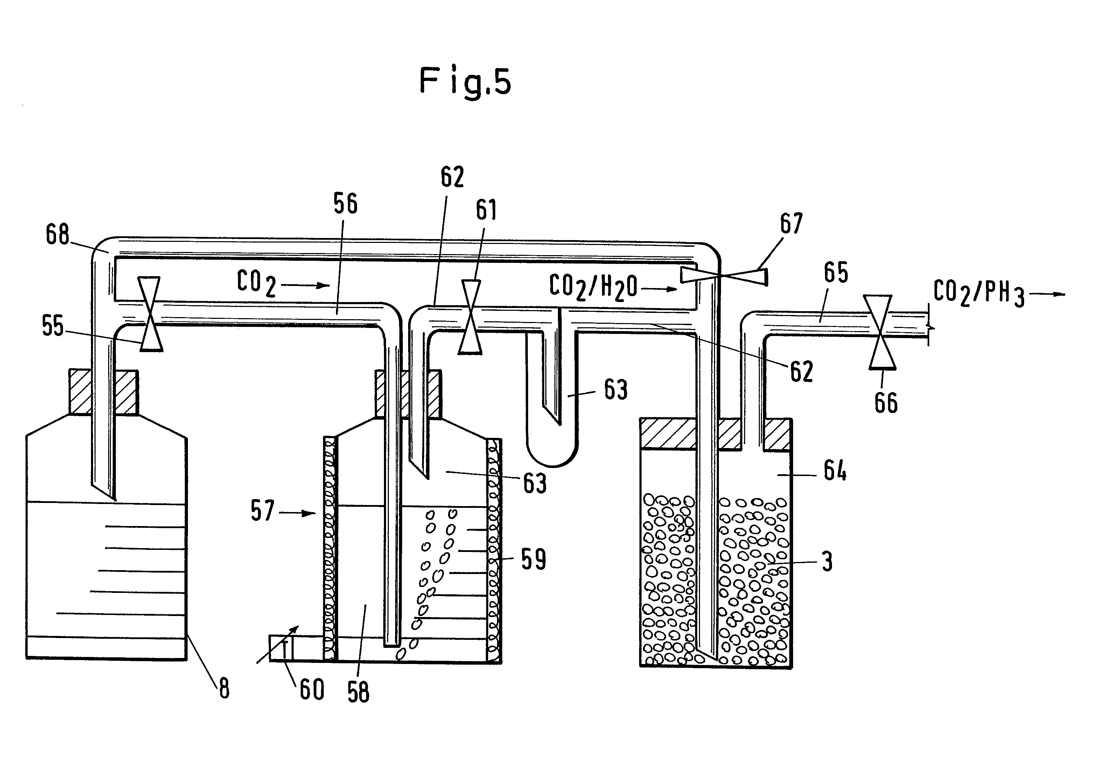

Eine bevorzugte Variante des beschriebenen Verfahrens stellt das sog. kontinuierliche Gasverfahren dar. Der Verfahrensablauf ist in der Fig. 5 schematisch veranschaulicht. Bei dieser Verfahrensvariante, die mit gasförmigem Kohlendioxid arbeitet, wird zur Wasserdosierung in das Kohlendioxid die Tatsache ausgenutzt, daß die Sättigungsmenge des Kohlendioxidgases für Wasserdampf bei verschiedenen Temperaturen unterschiedlich ist.

In der schematischen Verfahrensdarstellung der Fig. 5 ist der Gasraum eines $CO_2$-Vorratsbehälters 8 über eine mit einem Entspannungsventil 55 versehene Leitung 56 mit einem Wasserbehälter 57 verbunden, in dessen Wasserfüllung 58 die Leitung 56 hineinragt. Der Wasserbehälter 57 ist mit einem Heizmantel 59 umgeben, welcher mit einem Temperaturregler 60 versehen ist. Eine mit einem Ventil 61 versehene Weiterführungsleitung 62 für das gasförmige Kohlendioxid beginnt im Gasraum 63 des Wasserbehälters 57 oberhalb des Spiegels der Wasserfläche 58. Die Leitung führt weiter über einen Flüssigkeitsabscheider 63 in einen Reaktor 64. Der Reaktor 64 enthält eine Packung von Magnesiumphosphid 3, in die die Leitung 62 hineinführt. Eine mit einem Ventil 66 versehene Leitung 65 für das im Reaktor 64 erzeugte Entwesungsgas verläßt den Reaktor an dessen oberem Ende. Schließlich ist noch eine mit einem Ventil 67 versehene Bypaßleitung 68 vorgesehen, die den Gasraum des $CO_2$-Vorratsbehälters 8 direkt mit der Leitung 62 verbindet, die in die Magnesiumphosphidpackung des Reaktors 64 führt.

Der Verfahrensablauf ist folgendermaßen: Über die Leitung 56 wird gasförmiges $CO_2$ aus dem Vorratsbehälter 8 abgezogen und durch die Wasserfüllung 58 des Wasserbehälters 57 geleitet. Dort sättigt sich das Kohlendioxidgas mit $H_2O$. Da die Sättigungsmenge von der Temperatur des Gases abhängig ist, läßt sie sich durch gezielte Temperaturregelung der Wassermenge 58 mittels des Heizmantels 59 und des Temperaturreglers 60 einstellen, so daß ein Kohlendioxidgas mit einer ganz bestimmten Wasserdampfmenge dem Reaktor 64 zur Reaktion mit dem Magnesiumphosphid 3 zugeführt wird. Diese Anordnung bildet nicht nur eine elegante Möglichkeit zur Steuerung der der Reaktion zugeführten Wassermenge, sie läßt sich auch mit großer Sicherheit betreiben, da bei Durchgehen der Reaktion im Reaktor 64, die sich in einer starken Temperaturerhöhung ausdrückt, über die Bypaßleitung 68 unmittelbar nicht mit Wasserdampf beladenes Kohlendioxidgas dem Reaktor zugeführt werden kann, um die Reaktion zu bremsen.

Die Schnelligkeit der Reaktion zwischen dem mit Wasserdampf beladenen Kohlendioxidgas und dem vorgelegten Metallphosphid hängt von der Schnelligkeit des Gasdurchflusses, nämlich der Kontaktzeit, der Reaktionsfreudigkeit des Metallphosphids, der Basizität des Metallions und der Temperatur ab. So wird sich aus Aluminiumphosphid eher ein basisches als ein tertiäres Carbonat bilden, was Rückwirkungen auf die Stöchiometrie der Umsetzung von Wasserdampf in Phosphorwasserstoff hat. Da sich Kohlendioxid beim Verdampfen abkühlt, findet ein ständiger Kältetransport in den Wasserbehälter 57 statt, der zum Einhalten einer bestimmten Temperatur daher laufend beheizt werden muß. Durch die im Wasserzylinder herrschende Temperatur ist auch in eindeutiger Weise der Wassergehalt des Kohlendioxids sowie die Reaktionsschnelligkeit und damit der Phosphorwasserstoffgehalt der resultierenden Gasmischung vorgegeben. Die hier beschriebene Verfahrensvariante hat folgende Vorteile:

-Steuerung der Reaktionsgeschwindigkeit über die Wasserdampfsättigung,

-ständige Beaufschlagung des Reaktionsgemisches mit Inertgas in hohem Überschuß und

- drucklose Erzeugung eines direkt verwendungsfähigen Gasgemisches.

Beispiel 2

Bei vollständigem Umsatz entsprechend der weiter oben wiedergegebenen theoretischen Reaktionsgleichung ergeben sich bei einem Verfahrensablauf gemäß Fig. 5 bei mit Wasserdampf gesättigtem Kohlendioxidgas folgende Phosphorwasserstoffgehalte in Vol.-% im entstehenden Entwesungsgas in Abhängigkeit von der Temperatur des Wasserbehälters:

| $T°C$ : | 5 | 10 | 15 | 20 | 25 | 30 | 35 | 40 | 45 |
|---|---|---|---|---|---|---|---|---|---|
| Vol%: | 0,57 | 0,84 | 1,22 | 1,75 | 2,48 | 3,46 | 4,79 | 6,56 | 8,89 |

Für die Begasung eines Objektes von 10 000 m³ Rauminhalt mit einer Phosphiddosierung von 500 ppm v/v Phosphorwasserstoff und einer Wassertemperatur im Wasserbehälter 57 von 25°C ergibt sich eine Phosphorwasserstoffkonzentration im Kohlendioxidgas von etwa 2,5 Vol.-%. Zur Begasung des Objektes sind etwa 200 m³ des Entwesungsgases (2 Vol.-% des Objektrauminhaltes) entsprechend einer Kohlendioxidmenge von 360 bis 370 kg erforderlich. In dieser Menge von Entwesungsgas sind 7000 g Phosphorwasserstoff enthalten, was der oben angenommenen Dosierungsmenge entspricht.

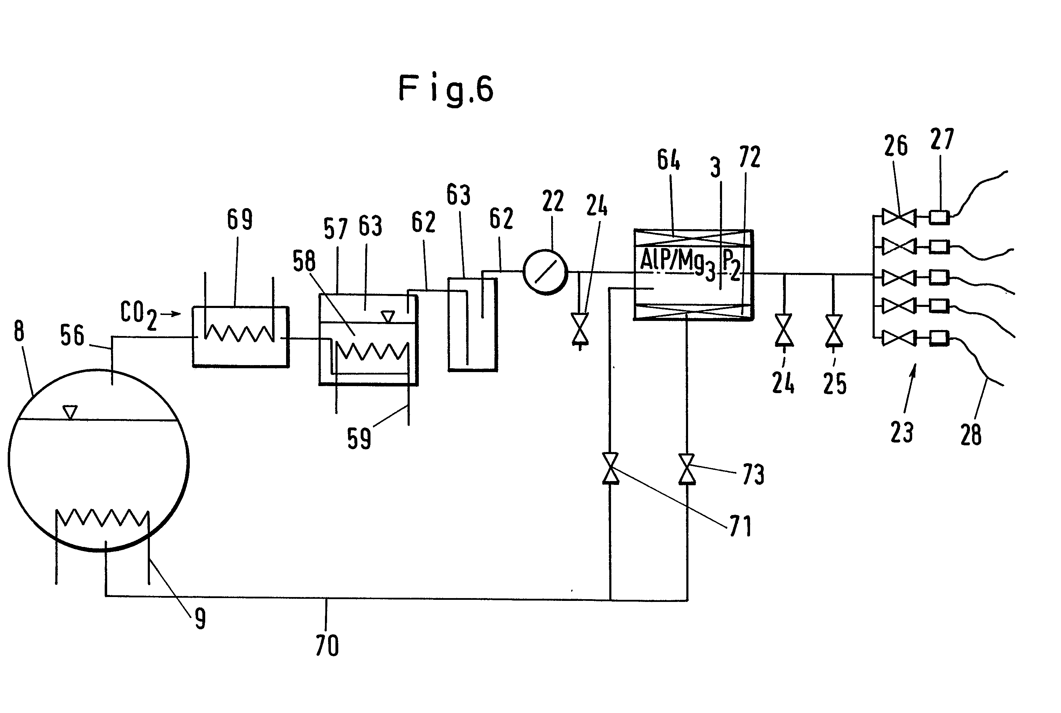

In Figur 6 ist das Schema einer Anlage dargestellt, die nach dem in Verbindung mit Fig. 5 beschriebenen Verfahren arbeitet. In der Leitung 56 für gasförmiges $CO_2$, die aus dem Gasraum des Vorratsbehälters 8 zum Wasserbehälter 57 führt, ist noch ein indirekter Wärmetauscher 69 vorgesehen. Außerdem ist auch der Vorratsbehälter 8 mit einer Heizeinrichtung 9 versehen. Da durch Entspannen des Kohlendioxidgases laufend Kälte in den Wasserbehälter 57 transportiert, d.h. dessen Füllung laufend Wärme entzogen wird, reicht die Heizung 59 im Wasserbehälter 57 im allgemeinen nicht aus, um die Wassertemperatur auf einem gewünschten Wert zu halten. Es ist daher zweckmäßig, das Kohlendioxid bereits im Vorratsbehälter und in dem zusätzlichen Wärmetauscher 69 vorzuheizen, bevor es in den Wasserbehälter 57 zur Sättigung mit Wasserdampf gelangt.

Hinter dem Wasserabscheider 63 befindet sich eine Durchflußmessung 22, um die dem Reaktor 64 zugeführte Menge an Kohlendioxidgas zu steuern. Eine Bypaßleitung 70 zum Zuführen von zusätzlichem Kohlendioxidgas in den Reaktor 64 ist bei diesem Ausführungsbeispiel an den Flüssigkeitsraum des Kohlendioxidvorratsbehälters 8 angeschlossen. Sie enthält deswegen ein Entspannungsventil 71, um dem Reaktor 64 das Kohlendioxid in gasförmigem Zustand zukommen zu lassen. Der Reaktor 64 selbst ist zusätzlich noch mit einem Kühlmantel 72 versehen, dem über eine Abzweigleitung 73 von der Leitung 70 zusätzlich flüssiges oder entspanntes gasförmiges Kohlendioxid zum Kühlen zugeführt werden kann.

**Ansprüche**

1. Verfahren zur Herstellung eines Entwesungsfluids, welches ein inertes Fluid und Phosphorwasserstoff enthält, der aus der Hydrolyse eines wasserzersetzlichen Metallphosphides erhalten wird, dadurch gekennzeichnet, daß dem inerten Fluid $H_2O$ zugesetzt, die Inertfluid/$H_2O$-Mischung mit dem Metallphosphid zur Reaktion in Berührung gebracht und das entstandene Entwesungsfluid vom festen Reaktionsrückstand abgetrennt wird.

2. Verfahren nach Anspruch 1, dadurch gekennzeichnet, daß als Inertfluid Stickstoff, Argon oder Helium im fluiden Zustand verwendet werden.

3. Verfahren nach Anspruch 1, dadurch gekennzeichnet, daß als Inertfluid Kohlendioxid in fluidem Zustand verwendet wird.

4. Verfahren nach einem der Ansprüche 1-3, dadurch gekennzeichnet, daß eine Mischung aus dem Inertfluid im flüssigen Zustand und flüssigem Wasser mit dem Metallphosphid in Reaktionskontakt gebracht wird.

5. Verfahren nach Anspruch 4, dadurch gekennzeichnet, daß in einem Reaktionsraum von unten nach oben zuerst eine bestimmte Menge des Metallphosphids, Inertfluid im erstarrten Zustand und eine zur vollständigen Reaktion des Metallphosphids ausreichende Menge an Wassereis übereinandergeschichtet, der Reaktionsraum druckfest verschlossen und mit der Umgebungstemperatur zum Temperaturausgleich gebracht wird, wobei zuerst das erstarrte Inertfluid unter Druckerhöhung in den flüssigen Zustand übergeht, sich mit Wasser aus dem schmelzenden Wassereis vermischt und das Wasser zur Reaktion mit dem Metallphosphid zusammenbringt.

6. Verfahren nach Anspruch 5, dadurch gekennzeichnet, daß das aus Inertfluid und Phosphorwasserstoff bestehende Gemisch aus dem Reaktionsraum im gasförmigen Zustand abgezogen wird.

7. Verfahren nach Anspruch 5 oder 6, dadurch gekennzeichnet, daß sich nach erfolgter Reaktion und vor Entnahme von Entwesungsfluid aus dem Reaktionsraum eine Konzentration von nicht mehr als 10 Vol.-% Phosphorwasserstoff, vorzugsweise von nicht mehr als 5 Vol.-% Phosphorwasserstoff im Inertfluid einstellt.

8. Verfahren nach Anspruch 4, dadurch gekennzeichnet, daß in einer druckdichten Anlage dem einem Vorratsdruckbehälter kontinuierlich entnommenen flüssigen oder überkritischen Inertfluid die für den Reaktionsablauf erforderliche Menge flüssigen Wassers injiziert und diese Mischung in eine das Metallphosphid enthaltende Extraktionskolonnne geleitet wird, aus der das entstandene Entwesungsfluid entnommen wird.

9. Verfahren nach Anspruch 8, dadurch gekennzeichnet, daß das Entwesungsfluid unter Druck in einem Sammelbehälter gesammelt wird.

10. Verfahren nach Anspruch 8 oder 9, dadurch gekennzeichnet, daß das flüssige oder überkritische Inertfluid nach Entnahme aus dem Vorratsbehälter zum Einregeln einer bestimmten Reaktionstemperatur durch einen Wärmetauscher geleitet wird.

11. Verfahren nach einem der Ansprüche 8-10, dadurch gekennzeichnet, daß das Entwesungsfluid der Extraktionskolonne oder dem Sammelbehälter unter Druckentspannung als Entwesungsgas entnommen und der Weiterverwendung zugeführt wird.

12. Verfahren nach Anspruch 11, dadurch gekennzeichnet, daß das Entwesungsgas vor der Weiterverwendung durch Zuführen weiteren gasförmigen Inertfluids auf eine gewünschte Phosphorwasserstoffkonzentration verdünnt wird.

13. Verfahren nach Anspruch 11 oder 12, dadurch gekennzeichnet, daß das Entwesungsgas für Bevorratung und Transport mit Hilfe eines geeigneten indirekt angewandten Kühlmittels in verschließbaren Druckflaschen niedergeschlagen wird.

14. Verfahren nach Anspruch 11 oder 12, dadurch gekennzeichnet, daß bei direkter Weiterverwendung des Entwesungsgases zur Begasung von Behältern das verbleibende Inertfluid wieder in den Prozeß zurückgeführt wird.

15. Verfahren nach einem der Ansprüche 1-3, dadurch gekennzeichnet, daß das Inertfluid im gasförmigen Zustand mit Wasserdampf beladen und diese Gasmischung durch das Metallphosphid geleitet wird.

16. Verfahren nach Anspruch 15, dadurch gekennzeichnet, daß das Inertgas zwecks Aufnahme von Wasserdampf durch eine Menge flüssigen Wassers geleitet wird.

17. Verfahren nach Anspruch 16, dadurch gekennzeichnet, daß die Menge flüssigen Wassers temperaturgeregelt wird.

18. Verfahren nach einem der Ansprüche 15-17, dadurch gekennzeichnet, daß dem Metallphosphid zur Steuerung des Reaktionsablaufes zusätzlich trockenes Inertgas zugeführt wird.

19. Verfahren nach einem der Ansprüche 15-18, dadurch gekennzeichnet, daß der das Metallphosphid enthaltende Reaktionsraum temperaturgeregelt wird.

20. Verfahren nach einem der Ansprüche 15-19, dadurch gekennzeichnet, daß das durch die Reaktion des Metallphosphids erhaltene Entwesungsgas unmittelbar der Weiterverwendung zugeführt wird.

21. Verfahren nach einem der Ansprüche 15-20, dadurch gekennzeichnet, daß bei Verwendung von Kohlendioxid als Inertgas die Wasserdampfmenge im Kohlendioxidgas sowie weitere Reaktionsparameter derart gesteuert werden, daß das Entwesungsgas nicht mehr als 10 Vol.-% Phosphorwasserstoff, vorzugsweise etwa 5 Vol.-% Phosphorwasserstoff enthält.

22. Vorrichtung zur Durchführung des Verfahrens nach einem der Ansprüche 1-21, gekennzeichnet durch einen Reaktor zur Aufnahme eines Metallphosphides, eine Dosiereinrichtung für ein Inertfluid, eine Dosiereinrichtung für Wasser, Mittel zum Mischen des Kohlendioxids mit dem Wasser, Mittel zum Einleiten des Gemisches in den Reaktor und Mittel zum dosierten Abziehen von Entwesungsfluid, bestehend aus Inertfluid und Phosphorwasserstoff aus dem Reaktor.

# Fig.1

PH$_3$/CO$_2$ →

Fig. 2

0 247 555

Fig. 3

29

2

35

36

37

38

39

CO₂ →

32

31

30

33

34

→ H₂O

0 247 555

# Fig.4

Fig.5

# Fig.6

0 247 555